# EUROPÄISCHE PATENTANMELDUNG

(11) **EP 0 765 064 A2**
(43) Veröffentlichungstag der Anmeldung: **26.03.1997**
(21) Anmeldenummer: 96115050.5
(22) Anmeldetag: 19.09.1996
(51) Int. Cl.: H04M 3/42, H04Q 3/62

(54) **Verfahren und Schaltungsanordnung zur Generierung von leistungsmerkmalsauslösenden Befehlen**

(30) Priorität: 20.09.1995 DE 19534939
(71) Anmelder: SIEMENS AKTIENGESELLSCHAFT, 80333 München (DE)
(72) Erfinder: Berger, Harald, 33014 Bad Driburg (DE); Scharfen, Gerhard, 33181 Wünneberg (DE)

(57) **Zusammenfassung**

Die Erfindung betrifft ein Verfahren und eine Schaltungsanordnung zur Generierung von leistungsmerkmalsauslösenden Befehlen in einer Fernmeldevermittlungseinrichtung, wobei der Fernmeldevermittlungseinrichtung zugeordnete Fernmeldeendgeräte Tasten aufweisen, die jeweils eine Tastatur bilden und denen unterschiedliche tastenindividuelle Tasteninhaltsdaten zugeordnet werden können. Zur Reduzierung von Speicherplatz ist erfindungsgemäß vorgesehen, daß erste tastaturindividuelle Sätze von Tasteninhaltsdaten für Gruppen von Fernmeldeendgeräten in der Fernmeldevermittlungseinrichtung in gruppenindividuellen ersten Speichern abgespeichert sind, während zweite tastaturindividuelle Sätze von Tasteninhaltsdaten für nicht-gruppenzugehörige Fernmeldeendgeräte in endgerätindividuellen zweiten Speichern abgespeichert sind. Bei Betätigung einer Taste eines gruppenzugehörigen Fernmeldeendgeräts zur Generierung eines leistungsmerkmalsauslösenden Befehls wird aus dem gruppen-individuellen ersten Speicher das abgespeicherte Tasteninhaltsdatum gelesen; bei Betätigung einer Taste eines nicht-gruppenzugehörigen Fernmeldeendgeräts zur Generierung eines leistungsmerkmalsauslösenden Befehls wird aus dem endgerätindividuellen zweiten Speicher das abgespeicherte Tasteninhaltsdatum gelesen.

## Beschreibung

Die Erfindung betrifft ein Verfahren und Schaltungsanordnung zur Generierung von leistungsmerkmalsauslösenden Befehlen nach dem Oberbegriff des Patentanspruchs 1 bzw. nach Patentanspruch 8.

Es sind bereits Fernmeldeendgeräte und Rufnummerngeber mit sogenannten Funktionstasten bekannt, die wahlweise zum Aktivieren einer Funktion im Sinne eines Leistungsmerkmales oder zum Speichern einer Rufnummer oder eines kurzen Informationstextes genutzt werden können.

Die Daten über die Funktionalität der Funktionstasten und gegebenenfalls deren Inhalt werden dabei etwa im Endgerät/Rufnummerngeber selbst, auf der zugehörigen Linecard in der privaten Nebenstellenvermittlungseinrichtung oder auf der zentralen Steuerung der Nebenstellenvermittlungseinrichtung gespeichert oder sind durch die Software fest vorgegeben und damit quasi "festverdrahtet".

Sind Funktionstasten in diesem Sinne festverdrahtet, so ist für diesen Endgerätetyp die Anordnung der Funktionstasten ohne Änderung der Software nicht möglich.

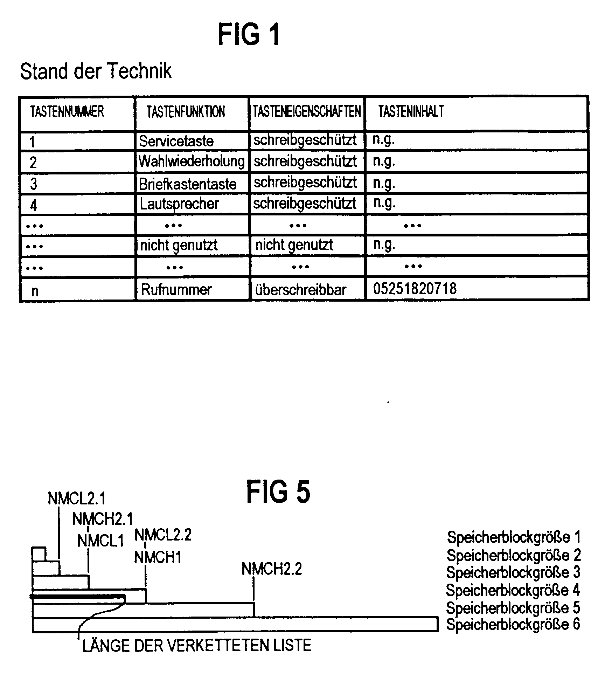

Bei programmierbaren Funktionstasten wird je Taste soviel Speicher vorgehalten, daß die Funktion und der maximale mögliche Inhalt (z.B. die längste mögliche Rufnummer/Informationstext) gespeichert werden können. Dieser Speicherplatz wird für jede an einem Endgerät/Rufnummerngeber vorhandene Taste vorgesehen (Figur 1).

Die zu den frei programmierbaren Funktionstasten an digitalen Endgeräten gehörenden Daten werden bisher in der Regel in Tabellenstrukturen abgelegt, wobei für jeden Teilnehmer eine Tabelle angelegt wird.

Hierbei ist jeder programmierbaren Funktionstaste eine Zeile in der Tabelle zugeordnet und die Anzahl der Zeilen der Tabelle entspricht der Anzahl der Tasten an einem Endgerät. Für jeden Endgerätetyp muß also in Abhängigkeit von der Anzahl der frei programmierbaren Funktionstasten eine unterschiedliche Tabellengröße vorgesehen werden oder alle Endgerätetypen arbeiten mit derselben Tabellenstruktur, wobei dann die größte Tabelle genutzt werden muß.

Dieses Konzept hat eine Reihe von Nachteilen: einzelne Teile der Tabelle werden nicht genutzt, wenn z.B. eine Taste nicht programmiert ist. Einzelne Tabellenelemente in einer Zeile werden nicht genutzt, wenn z.B. eine Funktionstaste keinen Inhalt hat. In vielen Fällen wird die maximale Länge eines Tabellenelementes nicht genutzt. Insgesamt wird in herkömmlichen Systemen Speicherplatz für Tasteninhaltsdaten unwirtschaftlich genutzt.

Ausgehend von diesem Stand der Technik liegt der Erfindung die Aufgabe zugrunde, ein Verfahren und eine Schaltungsanordnung der eingangs genannten Art anzugeben, die eine wirtschaftliche Nutzung von Speicherplatz für Tasteninhaltsdaten ermöglichen.

Diese Aufgabe wird erfindungsgemäß durch ein Verfahren und eine Schaltungsanordnung gelöst, die in den Ansprüchen definiert sind.

Die Erfindung ist mit einer Mehrzahl von Vorteilen verbunden.

Die Erfindung ermöglicht es, verschiedene Standardtastenlayouts für eine Endgerätefamilie zu erstellen. Der Speicherplatzbedarf für tastaturbezogene Daten wird erheblich gesenkt: die Tastenlayouts für Endgeräte bzw. Rufnummergeber werden anlagenglobal, d.h. vermittlungseinrichtungsweit definiert, wobei n verschiedene Standardtastenlayouts definiert werden können. Solange ein Teilnehmer (Benutzer eines Endgeräts, das der Vermittlungseinrichtung zugeordnet ist) dieses Standardlayout nicht verändert, greift er auf diese globalen Daten zu und verfügt über keine eigenen lokalen Tastendaten, sondern nur über einen Zeiger auf die globalen Daten und belegt somit auch keinen Speicher.

Verändert ein Teilnehmer seine Tasteninhaltsdaten, wird eine Kopie der globalen Daten angelegt, diese werden modifiziert und der Teilnehmer greift dann auf diese Kopie zu. Erst nun wird für das Teilnehmerendgerät ein endgeräteindividueller Speicher belegt.

Nach einer vorteilhaften Ausführungsform des erfindungsgemäßen Verfahrens werden die Tasteninhaltsdaten als verkettete Liste gespeichert. Diese Datenstruktur wird für die anlagenglobalen und/oder für die lokalen Tasteninhaltsdaten genutzt. Hierdurch läßt sich der Speicherbedarf weiter reduzieren.

Die Erfindung wird nun anhand der Zeichnung beschrieben.

Es zeigt
- Figur 1: ein Beispiel einer herkömmlichen Tasteninhaltsdatenstruktur;
- Figur 2: ein Blockschaltbild einer Fernmeldevermittlungseinrichtung mit zugehörigen Fernmeldeendgeräten, in welcher das erfindungsgemäße Verfahren durchführbar ist;
- Figur 3: Beispiele für Tasteninhaltsdatenstrukturen gemäß der Erfindung;
- Figur 4: ein Beispiel einer verketteten Liste von Tasteninhaltsdatenstrukturen mit einem zugehörigen Fernsprechendgerät;
- Figur 5: den Zusammenhang zwischen erfindungsgemäß vorgesehenen Speicherblockgrößen und der Länge verketteter Listen von Tasteninhaltsdaten; und
- Figur 6: ein Beispiel für den modularen Aufbau eines Steuerungsprogramms einer Fernmeldevermittlungseinrichtung nach Figur 2.

Figur 1 zeigt die Struktur eines Tabellenspeichers mit Tasteninhaltsdaten in einer herkömmlichen Fernmeldevermittlungseinrichtung. In der Tabelle sind für frei programmierbare Funktionstasten mit den Tastennummern 1 ... n jeweils tastenindividuelle Tasteninhaltsdaten - abspeicherbar, wobei die Tasten u.a. die Eigenschaften "schreibgeschützt" oder "überschreibbar" haben (d.h. die Taste kann durch den Bediener des Endgeräts nicht überschrieben oder überschrieben werden). Je Taste wird soviel Speicherkapazität vorgehalten, daß Tasteninhaltsdaten eines maximalen Datenvolumens abgespeichert werden kann. Bei dem in Figur 1 dargestellten Beispiel sind allen Tasten bis auf die Taste n Tasteninhaltsdaten zugeordnet (n.g. bedeutet "nicht genutzt"). Der Taste mit der Nummer n ist das Tasteninhaltsdatum "05251802718" zugewiesen, welches dieser Rufnummer entspricht, wie in der Tabellenspalte "Tastenfunktion" angegeben. Im Stand der Technik ist für jedes Endgerät eine derartige Tabelle vorgesehen, unabhängig davon, ob den Tasten Inhaltsdaten zugeordnet sind, bzw. unabhängig vom Umfang der den Tasten zugeordneten Tasteninhaltsdaten. Die Zahl der Zeilen (Speicherplätze) in der Tabelle ist gleich der maximalen Zahl der Tasten eines Endgeräts im System.

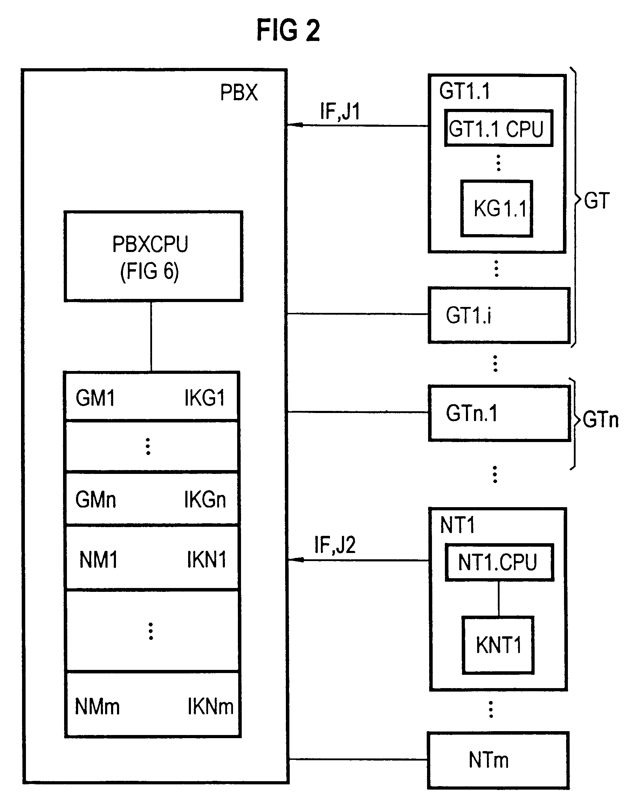

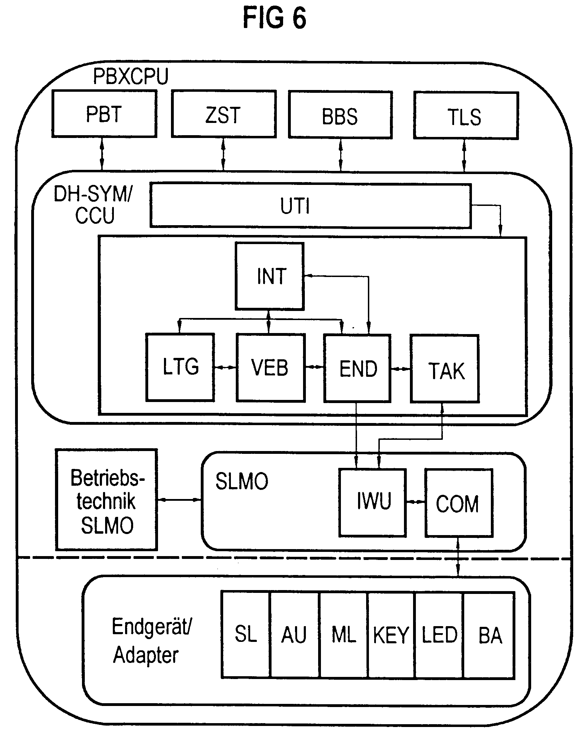

In Figur 2 ist schematisch eine Fernmeldevermittlungseinrichtung PBX mit einem Steuerwerk PBXCPU dargestellt, dem ein das erfindungsgemäße Verfahren definierendes Steuerungsprogramm zugeordnet ist. Das Steuerungsprogramm ist insbesondere modular aufgebaut, wobei die erfinderischen Verfahrensschritte zu einem Programmsteuerungsmodul TAK (Tastenkonverter, Fig. 6) zusammengefaßt werden können. Die in Figur 2 dargestellte Fernmeldevermittlungseinrichtung kann wie die in der von der Firma Siemens AG herausgegebenen Produktschrift "HICOM 600 System Product Data", Ordering-No. A19100-K3161-G430-01-7600 offenbarte System ausgestaltet sein, bzw. wie die Systeme, die in den veröffentlichten europäischen Patentanmeldungen EP 0 306 693 A1 (US-PS 4,903,258), EP 0 303 870 A2 (US-PS 5,018,097) und EP 0 303 869 (US-PS 5,047,923) offenbart sind. Die Fernmeldevermittlungseinrichtung PBX ist vorzugsweise eine private Vermittlungseinrichtung, sie kann aber auch eine öffentliche Vermittlungseinrichtung sein.

Ein erster in der Fernmeldevermittlungseinrichtung PBX vorgesehener Speicher (GM) weist Bereiche GM1, ...GMn für die Aufnahme erster Sätze von Tasteninhaltsdaten IKG und ein zweiter dort vorgesehener Speicher (NM) weist Bereiche NM1, ..., NMm für die Aufnahme zweiter Sätze von Tasteninhaltsdaten IKN auf.

Der Fernmeldevermittlungseinrichtung PBX sind Fernmeldeendgeräte GT und NT zugeordnet, wobei die Endgeräte GT jeweils einer Gruppe zugeordnet sind, während die Endgeräte NT keiner Gruppe zugeordnet sind.

Alle Endgeräte (z.B. GT1.1, ..., GT1.i) einer Gruppe (z.B. GT1) haben Betätigungsmittel, insbesondere Tasten, denen jeweils dasselbe Tasteninhaltsdatum zugeordnet ist. Diese Tasten, z.B. die Taste KG1.1 des Endgeräts GT1.1, sind insbesondere Funktionstasten, durch deren Betätigung jeweils ein leistungsmerkmalsauslösender Befehl IF generierbar ist. Beispiele für derartige Leistungsmerkmale sind "Konferenzschaltung" und "Wahlwiederholung". Die Tasten eines gruppenzugehörigen Endgeräts bilden eine Tastatur, wobei allen Endgeräten einer Gruppe derselbe erste tastaturindividueller Satz von Tasteninhaltsdaten IKG zugeordnet sind. So ist der Gruppe GT1 ein erster tastaturindividueller Satz von Tasteninhaltsdaten IKG1 und der Gruppe GTn ein erster Satz tastaturindividueller Satz von Tasteninhaltsdaten IKGn zugeordnet. Diese ersten tastaturindividuellen Sätze von Tasteninhaltsdaten sind in den Speichern bzw. Speicherbereichen GM1, ..., GMn abgespeichert.

Es können n derartige Gruppen GT1, ..., GTn von Endgeräten gebildet werden.

Jedes Endgerät kann ein lokales Steuerwerk haben; so hat das Endgerät GT1.1 das Steuerwerk GT1.1CPU. Die lokalen Steuerwerke der Endgeräte führen gemeinsam mit dem zentralen Steuerwerk PBXCPU das erfindungsgemäße Verfahren durch.

Die Endgeräte NT1, ..., NTm gehören keiner Gruppe an. Diese Endgeräte haben frei programmierbare Tasten. So hat z.B. das Endgerät NT1 die Taste KNT1, mit der ein leistungsmerkmalsauslösender Befehl IF generierbar ist.

Die Tasten eines nicht-gruppenindividuellen Endgeräts bilden eine Tastatur, wobei jedem nicht-gruppenindividuellen Endgerät ein zweiter tastaturindividueller Satz von Tasteninhaltsdaten IKN zugeordnet ist. So ist dem Endgerät NT1 ein zweiter tastaturindividueller Satz von Tasteninhaltsdaten IKN1 und dem Endgerät NTm ein zweiter Satz tastaturindividueller Satz von Tasteninhaltsdaten IKNm zugeordnet. Diese zweiten tastaturindividuellen Sätze von Tasteninhaltsdaten sind in den Speichern NK1, ..., NKm abgespeichert.

Jedes dieser Endgeräte kann ein lokales Steuerwerk haben; so hat das Endgerät NT1 das Steuerwerk NT11CPU. Diese lokalen Steuerwerke der Endgeräte führen gemeinsam mit dem zentralen Steuerwerk PBXCPU das erfindungsgemäße Verfahren durch.

Erfindungsgemäß sind also erste tastaturindividuelle Sätze von Tasteninhaltsdaten IKG für Gruppen von Fernmeldeendgeräten GT in der Fernmeldevermittlungseinrichtung PBX in gruppenindividuellen ersten Speichern GM abgespeichert, während zweite tastaturindividuelle Sätze von Tasteninhaltsdaten IKN für nicht-gruppenzugehörige Fernmeldeendgeräte NT in endgeräteindividuellen zweiten Speichern NM abgespeichert sind.
Bei Betätigung einer Taste KG1.1 eines gruppenzugehörigen Fernmeldeendgeräts GT zur Generierung eines leistungsmerkmalsauslösenden Befehls IF wird aus dem gruppen-individuellen ersten Speicher GM1 das dort abgespeicherte Tasteninhaltsdatum IKG1 gelesen. Mit diesem Tasteninhaltsdatum IKG1 wird das zugehörige Leistungsmerkmal (z.B. "Konferenzschaltung") vermittlungstechnisch in an sich bekannter Weise gebildet.

Bei Betätigung einer Taste KNT1 eines nicht-gruppenzugehörigen Fernmeldeendgeräts NT1 zur Generierung eines leistungsmerkmalsauslösenden Befehls IF wird aus dem endgeräteindividuellen zweiten Speicher NM1 das dort abgespeicherte Tasteninhaltsdatum IKN1 gelesen. Mit diesem Tasteninhaltsdatum IKN1 wird das zugehörige Leistungsmerkmal vermittlungstechnisch in an sich bekannter Weise gebildet.

Erfindungsgemäß können ursprünglich gruppenzugehörigen Endgeräten endgeräteindividuelle Tasteninhaltsdaten zugeordnet werden, während urspünglich nicht-gruppenzugehörigen Endgeräten die Tasteninhaltsdaten von Endgeräten einer bestimmten Gruppe zugeordnet werden können.

Das dem Steuerwerk PBXCPU und den lokalen Endgerätesteuerwerken zugeordnete Steuerungsprogramm ist in der Weise ausgestaltet, daß ausgelöst durch einen in ein ursprünglich gruppenzugehöriges Fernmeldeendgerät (z.B. GT1) oder in eine nicht dargestellte, zentrale Systemverwaltungseinrichtung eingegebenen ersten Befehl I1 ein zweiter tastaturindividueller Satz von Tasteninhaltsdaten IKN in einen endgeräteindividuellen zweiten Speicher NM abspeicherbar ist, wobei dieser zweite Satz von Tasteninhaltsdaten diesem Fernmeldeendgerät nach Abspeicherung der Tasteninhaltsdaten zugeordnet ist. Dem ursprünglich gruppenzugehörigen Endgerät werden also endgeräteindividuelle Tasteninhaltsdaten zugeordnet. Für dieses Endgerät besteht im Rahmen des erfindungsgemäßen Verfahrens jederzeit die Möglichkeit, einzelne oder auch alle am Endgerät vorhandenen Funktionstasten frei zu programmieren. Erst zu diesem Zeitpunkt wird für dieses Endgerät ein endgerätindividueller zweiter Speicher NM belegt.

Das dem Steuerwerk PBXCPU und den lokalen Endgerätesteuerwerken zugeordnete Steuerungsprogramm ist weiterhin in der Weise ausgestaltet, daß ausgelöst durch einen in ein ursprünglich nicht-gruppenzugehöriges Fernmeldeendgerät NT oder in die nicht dargestellte zentrale Systemverwaltungseinrichtung eingebbaren zweiten Befehl I2 ein erster tastaturindividueller Satz von Tasteninhaltsdaten IKG (z.B: IKG1) diesem ursprünglich nicht-gruppenzugehörigen Fernmeldeendgerät zugeordnet wird.

Dem ursprünglich nicht-gruppenzugehörigen Endgerät werden also gruppenindividuelle Tasteninhaltsdaten zugeordnet. Für das Endgerät besteht im Rahmen des erfindungsgemäßen Verfahrens jederzeit die Möglichkeit, in eine Gruppe aufgenommen zu werden. Zu diesem Zeitpunkt wird für dieses Endgerät der ursprünglich belegte endgeräteindividueller zweite Speicher NM gelöscht bzw. anderweitig genutzt, so daß durch die Aufnahme des genannten Endgeräts in eine Gruppe der Speicherbedarf für die Abspeicherung von Tasteninhaltsdaten reduziert wird.

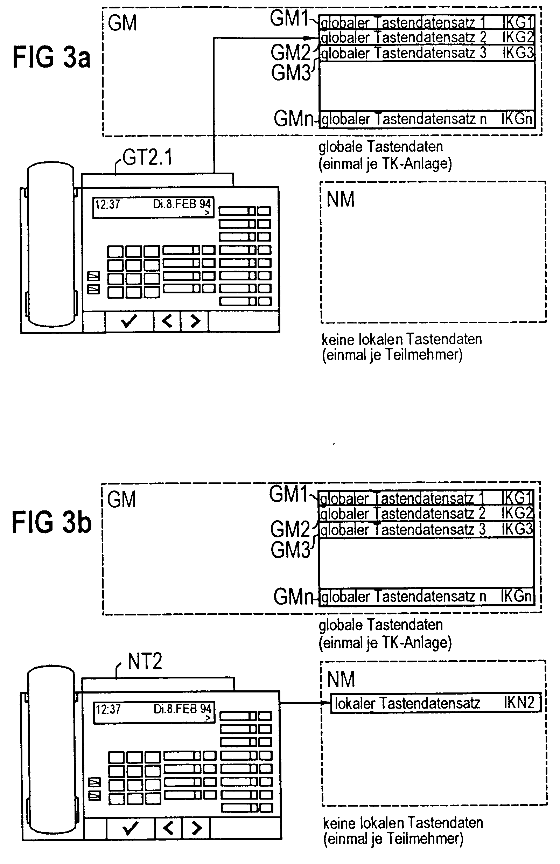

In Figur 3a ist schematisch eine Anordnung dargestellt, wobei n Gruppen von gruppenzugehörigen Endgeräten entsprechende erste Sätze ("globale Tastendaten") von Tasteninhaltsdaten IKG1, ...IKGn zugeordnet sind. Diese Datensätze sind im ersten Speicher GM bzw. in n ersten Speicherbereichen GM1, ..., GMn einmal je Telekommunikationsanlage (TK-Anlage) bzw. Fernmeldevermittlungseinrichtung abgespeichert. Dies ist für das gruppenzugehörige Endgerät GT2.1 dargestellt. Bei dem in Figur 3a dargestellten Beispiel ist in der Fernmeldevermittlungseinrichtung kein nicht-gruppenzugehöriges Endgerät vorgesehen; der zweite Speicher NM ist frei.

In Figur 3b ist schematisch eine Anordnung dargestellt, wobei wiederum n Gruppen von gruppenzugehörigen Endgeräten entsprechende erste Sätze ("globale Tastendaten") von Tasteninhaltsdaten IKG1, ...IKGn zugeordnet sind. Diese Datensätze sind im ersten Speicher GM bzw. in n ersten Speicherbereichen GM1, ..., GMn einmal je Telekommunikationsanlage (TK-Anlage) bzw. Fernmeldevermittlungseinrichtung abgespeichert. Bei dem in Figur 3b dargestellten Beispiel ist in der Fernmeldevermittlungseinrichtung das nicht-gruppenzugehörige Endgerät NT2 vorgesehen, für welches in dem zweiten Speicher NM2 der zweite tastaturindividuelle Satz von Tasteninhaltsdaten ("lokale Tastendaten") IKN2 abgespeichert ist. Dieser zweite Datensatz ist einmal je Teilnehmer bzw. nicht-gruppenzugehörigem Endgerät vorgesehen.

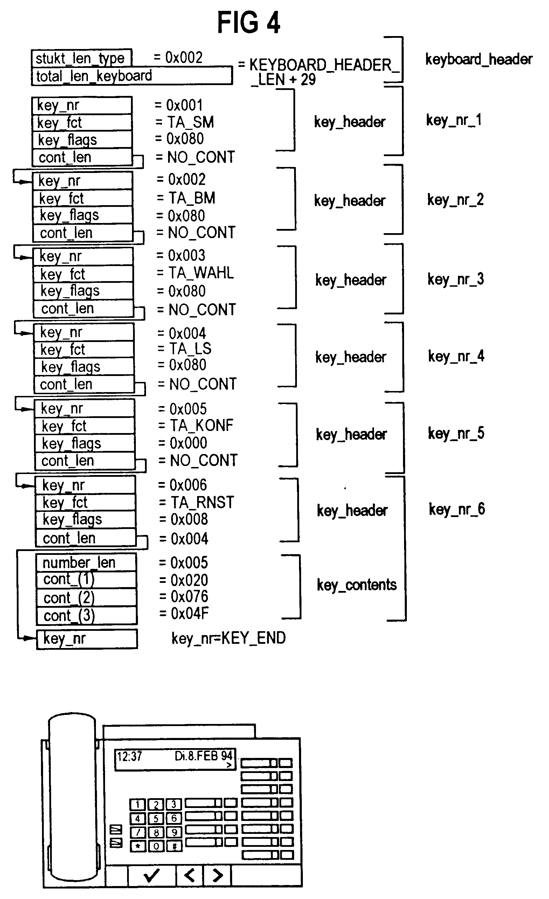

Erfindungsgemäß sind die ersten tastaturindividuelle Tasteninhaltsdatensätze IKG (für die gruppenzugehörigen Endgeräte) und/oder die zweiten tastaturindividuellen Tasteninhaltsdatensätze IKN (für die nicht-gruppenzugehörigen Endgeräte) als verkettete Listen abgespeichert werden. Ein Beispiel ist in Figur 4 für ein nicht-gruppenzugehöriges Endgerät mit den Funktionstasten "SERVICE", "BRIEFKA." (Briefkasten), "WAHL", "LS" ?, "KONF" (Konferenz) und "H.PUSCH" (Namenstaste des internen oder externen Endgeräts von "H. Pusch") dargestellt.

Die verkettete Liste weist eine Listenheaderinformation (keyboard header), tastenindividuelle Tastenheaderinformationen (key header) für jede genutzte Taste, Tasteninhaltsdaten (key contents) und eine Endekennungsinformation (KEY END) auf. Für die Tasteninhaltsdaten wird nur soviel Speicherplatz belegt, wie tatsächlich benötigt wird; Rufnummern werden beispielsweise BCD-codiert.

Der keyboard header enthält alle Daten, die zur Verwaltung der den Tasten zugehörigen Daten notwendig sind. Er enthält eine Information zur maximal möglichen Länge der Tastendaten und eine Information zur Länge der Tastendaten, insbesondere in Byte.

Der key header spezifiziert verschiedene Eigenschaften einer Taste. Existieren für eine Taste keine Daten, so existiert für diese Taste auch kein key header.

Die Variable key nr. des key header bezeichnet die physikalische Position der Taste am Endgerät bzw. an einem Rufnummerngeber DSS.

Die Variable key fct des key header bezeichnet die Funtion der Taste (z.B. Leitungstaste, Rufnummernspeichertaste, etc.).

Die Variable key flags des key header enthält verschiedene Flags, die Eigenschaften einer Funktionstaste näher spezifizieren (Änderung der Funktionalität einer Taste durch Endgerätebenutzer und/oder Systemverwalter).

Die Variable cont len des key header beschreibt die Länge des entsprechenden Speicherbereichs für die zugeordneten Parameter einre Taste. Ist einer Funktion kein Inhalt zugeordnet, so enthält die Variable cont len die Konstante NO CONT = 0. In diesem Fall folgt der nächste key header. Andernfalls (NO CONT # 0) werden die Tasteninhaltsdaten dem vorangegangenen key header zugeordnet.

Erfindungsgemäß sind für die Abspeicherung der zweiten tastaturindividuellen Tasteninhaltsdatensätze IKN Speicherbereiche NMC mit einer ersten unteren Speicherbereichsgrenze NMCL1 und/oder einer ersten oberen Speicherbereichsgrenze NMCH1 in dem zweiten Speicher NM belegbar.

Bei Unterschreiten der ersten unteren Speicherbereichsgrenze NMCL1 (z.B. wird für eine programmierbare Funktionstaste das ursprünglich abspeicherte Tasteninhaltsdatum (z.B. eine Rufnummer) gelöscht und es wird kein neues Tasteninhaltsdatum abgespeichert) ist der für die Abspeicherung der zweiten tastaturindividuellen Tasteninhaltsdatensätze IKN belegbare Speicherbereich NMC verkleinerbar.

Bei Überschreiten der ersten oberen Speicherbereichsgrenze NMCH1 (z.B. ist für eine programmierbare Funktionstaste ursprünglich kein Tasteninhaltsdatum abgespeichert; zu einem vorgebbaren Zeitpunkt wird ein Tasteninhaltsdatum (z.B. eine Rufnummer) abgespeichert), ist der für die Abspeicherung der zweiten tastaturindividuellen Tasteninhaltsdatensätze IKN belegbare Speicherbereich NMC vergrößerbar.

Dies ist in Figur 5 schematisch dargestellt: Das Steuerungsprogramm der Fernmeldevermittlungseinrichtung ist in der Weise ausgestaltet, daß beispielsweise sechs verschieden große Speicherbereiche bzw. Speicherblöcke ("Speicherblockgrößen" 1 bis 6 in Figur 5) vorgesehen werden. Es wird nun davon ausgegangen, daß die Länge einer verketteten Liste zwischen einer unteren Grenze NMCL1 des Speicherbereichs 4 und dessen oberen Grenze NMCH1 liegt. NNCL1 ist zugleich die obere Grenze des Speicherbereichs 3.

Verkürzt sich die Länge der verketteten Liste auf einen Wert unterhalb NMCL1, so wird der Liste der Speicherbereich 3 zugewiesen, dessen untere Grenze NMCL2.1 ist und dessen obere Grenze NMCH2.1 (zugleich NMCL1) ist.

Vergrößert sich die Länge der verketteten Liste auf einen Wert oberhalb NMCL1, so wird der Liste der Speicherbereich 5 zugewiesen, dessen untere Grenze NMCL2.2 (zugleich NMCH1) ist und dessen obere Grenze NMCH2.2 ist.

Es kann weiterhin vorgesehen werden, daß die Anzahl insbesondere der Speicherbereiche mit der größten Speicherkapazität (z.B: Speicherblockgröße 6 und eventuell 5 in Figur 5) systemweit begrenzt wird, um eine ausgewogene Speicherplatzverteilung für alle oder ausgewählte Endgeräte sicherzustellen.

Eine Veränderung des Datenvolumens eines zweiten Satzes tastaturindividueller Tasteninhaltsdaten führt also nur dann zu einer Zuweisung eines neuen Speicherbereichs, wenn die Länge der neuen Kette die untere oder obere Speicherbereichsgrenze des ursprünglichen Speicherbereichs unterschreitet oder überschreitet. Dies stellt sicher, daß nicht bei jeder Programmierung von Funktionstasten neue Speicherbereiche angefordert und alte Speicherbereiche freigegeben werden, sondern nur beim Unter- bzw. Überschreiten der jeweils unteren bzw. oberen Speicherbereichsbegrenze. Damit wird Rechenzeit eingespart und die Verwaltung der Speicherbereiche vereinfacht.

Wie in Figur 6 schematisch dargestellt, erfolgt das vorstehend beschriebene erfinderische Verfahren, insbesondere die Verwaltung der Tasteninhaltsdaten insbesondere durch einen eigenständigen Prozeß TAK (Tastenkonverter) des entsprechenden Devicehandlers DH-SYM CCU. Dieser Prozeß TAK, der vorzugsweise als Programmodul des Steuerungsprogramms der zentralen Steuerung PBXCPU ausgestaltet ist, übernimmt außerdem Routingfunktionalitäten zwischen der Linecard (SLMO) und demjenigen Prozeß, der die Benutzeroberfläche steuert (END-Prozeß).

Der Prozeß TAK steuert wie beschrieben den Zugriff auf globale Tastendaten ("erste tastaturindivudelle Tasteninhaltsdaten" der gruppenzugehörigen Endgeräte) und lokale Tastendaten ("zweite tastaturindividuelle Tasteninhaltsdaten" der nicht-gruppenzugehörigen Endgeräte)

Hierbei werden Endgerät und optionale Rufnummerngeber für alle anderen Prozesse zu einer Einheit zusammengefaßt, d.h. der Prozeß TAK übernimmt die vollständige Verwaltung der Rufnummerngeber (Daten/ Hochlauf/Abmeldung/LED-Steuerung/Drücken- und Loslassen von Tasten). Die Tasten/LED der Rufnummerngeber werden dabei als virtuelle Tasten/LED-Positionen des Endgeräts abgebildet.

Der Datenfluß zu den anderen Prozessen erfolgt über Messages (#e1, #e2) und ist von der internen Datenstruktur der Tastaturinhaltsdaten entkoppelt.

Erhält das Programmodul TAK von einem (gruppen- oder nicht-gruppenzugehörigen) Endgerät z.B. den Anreiz, daß die vierte Funktionstaste am Endgerät betätigt wurde, so wird der zugehörige ersten oder zweiten Datensatz durchsucht und der entsprechenden Anreiz an wird an denjenigen Prozeß gesendet, der für die Steuerung der Benutzeroberfläche verantwortlich ist.

Wurde beispielsweise die vierte Funktionstaste am Endgerät betätigt, die die Funktion "Konferenz" hat, so wird eine Message TAK_END_TA_KONF versendet.

Soll nun die LED der Konferenztaste geschaltet werden, so geschieht das ebenfalls über eine Message, z.B. END_TAK_LED_FKT, wobei die Funktion "Konferenz" als Parameter übergeben wird.

Für den END-Prozeß erfolgt also eine Trennung von der "Physik der Tasten", d.h. von Tastencodes und dem dazugehörigen Protokoll. So ist gegebenenfalls auch eine Anpassung an eine andere physikalische Schnittstelle mit relativ geringem Aufwand möglich.

Die Fernmeldevermittlungseinrichtung besteht aus folgenden Hardware- bzw. Softwarekomponenten:
- CCU -: Central Control Unit. Zentrale Baugruppe mit drei verschiedenen Prozessoren für die ZST, für die PST und für die Betriebstechnik (z.B. Hörtöne).
- ZST -: Zentrale Steuerung, eigenständige CPU auf der CCU, die u.a. Vermittlungsvorgänge steuert.
- PST -: Periphere Steuerung, steuert u.a. die Bedienung der Endgeräte.
- PBT -: Periphere Betriebstechnik, Task auf der CCU, die u.a. das Routing zwischen den Baugruppen (CCU, SMLO, ...) und die Verwaltung der Teilnehmer steuert (Anmelden/Anmelden etc.).
- TLS -: Teilnehmerlaufzeitsystem, Funktionssammlung zur Speicher-, Prozeß-, Timer und Queueverwaltung.
- BBS -: Basisbetriebssystem
- UTI-Prozeß -: Prozeß des Devicehandlers DH-SYM, der allgemeine Funktionen/Utilities des Devicehandlers realisiert, wie z.B. das Laden von Benutzerklassendaten, das An- und Anmelden von Teilnehmern etc.
- INT-Prozeß -: Prozeß des Devicehandlers DH-SYM, der Internverbindungen innerhalb eines Teams realisiert.
- VEB-Prozeß -: Prozeß des Devicehandlers DH-SYM, der den Verbindungsaufbau zu Teilnehmern außerhalb eines Teams steuert.
- LTG-Prozeß -: Prozeß des Devicehandlers DH-SYM, der das Belegen einer Leitung durch ein Endgerät und Teamfunktionen steuert.
- END-Prozeß -: Prozeß des Devicehandlers DH-SYM, der die Benutzerführung des Endgerätes steuert.
- TAK-Prozeß -: Prozeß Tastaturkonverter, der Routingfunktionalität, die Verwaltung der Tastaturinformationen, die Reaktion auf Tastenanreize und die Ansteuerung der LED übernimmt.
- IWU-Prozeß -: Prozeß des Devicehandlers DH-SYM, der auf der SLMO realisiert ist und das Routen der Nachrichten von der CCU zur SLMO steuert.
- COM-Prozeß -: Prozeß des Devicehandlers Symphony, der auf der SLMO realisiert ist und u.a. die Menüsteuerung übernimmt.

Die Endgeräte bestehen aus folgenden Hardware- bzw. Softwarekomponenten:
- SL -: Steuerung einer Statuszeile/Displayausgaben
- ML -: Steuerung einer Menüzeile/Displayausgabe
- AU -: Audioteil des Endgerätes
- KEY-: Tastensteuerung am Endgerät
- LED-: LED-Steuerung am Endgerät
- BA -: Allgemeine Steuerung am Endgerät

## Patentansprüche

1. Verfahren zur Generierung von leistungsmerkmalsauslösenden Befehlen (IF) in einer Fernmeldevermittlungseinrichtung (PBX), wobei der Fernmeldevermittlungseinrichtung (PBX) zugeordnete Fernmeldeendgeräte (GT, NT) Tasten aufweisen, die jeweils eine Tastatur bilden und denen unterschiedliche tastenindividuelle Tasteninhaltsdaten zugeordnet werden können,
dadurch gekennzeichnet,
daß erste tastaturindividuelle Sätze von Tasteninhaltsdaten (IKG) für Gruppen von Fernmeldeendgeräten(GT) in der Fernmeldevermittlungseinrichtung (PBX) in gruppenindividuellen ersten Speichern (GM) abgespeichert sind, daß zweite tastaturindividuelle Sätze von Tasteninhaltsdaten (IKN) für nicht-gruppenzugehörige Fernmeldeendgeräte (NT) in endgerätindividuellen zweiten Speichern (TM) abgespeichert sind, und daß bei Betätigung einer Taste (KG) eines gruppenzugehörigen Fernmeldeendgeräts (GT) zur Generierung eines leistungsmerkmalsauslösenden Befehls (IF) aus dem gruppen-individuellen ersten Speicher (GM) das abgespeicherte Tasteninhaltsdatum (IKG) gelesen wird, und daß bei Betätigung einer Taste (KN) eines nicht-gruppenzugehörigen Fernmeldeendgeräts (NT) zur Generierung eines leistungsmerkmalsauslösenden Befehls (IF) aus dem endgerätindividuellen zweiten Speicher (NM) das abgespeicherte Tasteninhaltsdatum (IKN) gelesen wird.

2. Verfahren nach Anspruch 1, dadurch gekennzeichnet, daß ausgelöst durch einen in ein ursprünglich gruppenzugehöriges Fernmeldeendgerät (GT) eingegebenen ersten Befehl (I1) ein zweiter tastaturindividueller Satz von Tasteninhaltsdaten (IKN) in einen endgeräteindividuellen zweiten Speicher (NM) abspeicherbar ist, welcher zweite Satz von Tasteninhaltsdaten(IKN) diesem Fernmeldeendgerät nach Abspeicherung der Tasteninhalts-daten(IKN) zugeordnet ist, und/oder daß ausgelöst durch einen in ein ursprünglich nicht-gruppenzugehöriges Fernmeldeendgerät (NT) eingebbaren zweiten Befehl (I2) ein erster tastaturindividueller Satz von Tasteninhaltsdaten (IKG) diesem ursprünglich nicht-gruppenzugehörigen Fernmeldeendgerät zugeordnet wird.

3. Verfahren nach einem der vorstehenden Ansprüche, dadurch gekennzeichnet, daß erste tastaturindividuelle Tasteninhaltsdatensätze (IKG) und/oder zweite tastaturindivudelle Tasten-inhaltsdatensätze (IKN) als verkettete Listen abgespeichert werden.

4. Verfahren nach Anspruch 4, dadurch gekennzeichnet, daß eine verkettete Liste eine Listenheaderinformation (keyboard header), tastenindividuelle Tastenheaderinformationen (key header), Tasteninhaltsdaten (key contents) und eine Endekennungsinformation (KEY END) aufweist.

5. Verfahren nach einem der vorstehenden Ansprüche, dadurch gekennzeichnet, daß für die Abspeicherung der zweiten tastatur-individuellen Tasteninhaltsdatensätze (IKN) Speicherbereiche (NMC) mit einer ersten unteren Speicherbereichsgrenze (NMCL1) und/oder einer ersten oberen Speicherbereichsgrenze (NMCH1) in dem zweiten Speicher (NM) belegbar sind.

6. Verfahren nach einem Anspruch 5, dadurch gekennzeichnet, daß bei Unterschreiten der ersten unteren Speicherbereichsgrenze (NMCL1) der für die Abspeicherung der zweiten tastaturiduellen Tasteninhaltsdatensätze (IKN) belegbare Speicherbereich (NMC) verkleinerbar ist und/oder daß bei Überschreiten der ersten oberen Speicherbereichsgrenze (NMCH1) der für die Abspeicherung der zweiten tastaturindividuellen Tasteninhaltsdatensätze (IKN) belegbare Speicherbereich (NMC) vergrößerbar ist.

7. Verfahren nach Anspruch 6, dadurch gekennzeichnet, daß nach Verkleinerung oder nach Vergrößerung des belegbaren Speicherbereichs (NMC) diesem eine zweite untere Speicherbereichsgrenze (NMCL2) und/oder zweite obere Speicherbereichsgrenze (NMCH2) zugeordnet wird.

8. Schaltungsanordnung zur Durchführung der Verfahrens nach einem der vorstehenden Ansprüche.

9. Schaltungsanordnung nach Anspruch 8, dadurch gekennzeichnet, daß einem Steuerwerk (PBXCPU) der Fernmeldevermitttlungsein-richtung (PBX) ein das Verfahren definierendes Steuerungsprogramm zugeordnet ist, und daß mindestens der gruppenindividuelle erste Speicher (GM) für die Aufnahme der ersten tastaturindividuellen Tasteninhaltsdatensätze (IKG) und mindestens der endgerätindividuelle zweite Speicher (NM) für die Aufnahme der zweiten tastaturindividuellen Tasteninhaltsdatensätze (IKN) vorgesehen ist.
